# EUROPÄISCHE PATENTSCHRIFT

(11) **EP 2 134 794 B1**
(45) Veröffentlichungstag und Bekanntmachung des Hinweises auf die Patenterteilung: **23.11.2011**
(21) Anmeldenummer: 08715878.8
(22) Anmeldetag: 20.02.2008
(51) Int. Cl.: C09B 57/00, C09B 67/04, C09B 67/08, C09B 67/20, C09D 5/00, G02B 5/22

(54) **PIGMENTZUBEREITUNGEN AUF BASIS VON DIKETOPYRROLOPYRROLEN**
PIGMENT PREPARATION BASED ON DIKETOPYRROLOPYRROLES
PREPARATIONS PIGMENTAIRES A BASE DE DICETOPYRROLOPYRROLES

(30) Priorität: 07.03.2007 DE 102007011067
(43) Veröffentlichungstag der Anmeldung: 23.12.2009
(73) Patentinhaber: Clariant Finance (BVI) Limited, Road Town, Tortola (VG)
(72) Erfinder: GANSCHOW, Matthias, 65195 Wiesbaden (DE); REICHWAGEN, Jens, 65203 Wiesbaden (DE); REIPEN, Tanja, 55124 Mainz (DE); PAETZOLD, Jens, 68642 Bürstadt (DE)
(74) Vertreter: Hütter, Klaus
(86) Internationale Anmeldenummer: PCT/EP2008/001307
(87) Internationale Veröffentlichungsnummer: WO 2008/107074

(56) Entgegenhaltungen:
- EP-A- 1 104 789
- DE-A1- 10 106 147
- DE-A1- 10 235 573
- JP-A- 3 026 767
- JP-A- 2004 277 434
- JP-A- 2007 224 177
- IQBAL A ET AL: "New Heterocyclic pigments" JCT. JOURNAL OF COATINGS TECHNOLOGY, PHILADELPHIA, PA, US, Bd. 60, 1. Januar 1988 (1988-01-01), Seiten 37-45, XP009090733 ISSN: 0361-8773

## Beschreibung

Die vorliegende Erfindung betrifft neue Pigmentzubereitungen mit C.I. Pigment Red 254 als Basispigment und bestimmten amingruppenhaltigen oder anionischen Pigmentdispergatoren auf Basis von C.I. Pigment Red 255.

Pigmentzubereitungen sind Kombinationen von Basispigmenten und so genannten Pigmentdispergatoren, das sind mit spezifisch wirksamen Gruppen substituierte Pigmente. Die Pigmentdispergatoren werden den Pigmenten zugesetzt, um die Dispergierung in den Anwendungsmedien, insbesondere in Lacken, Druckfarben und Tinten zu erleichtern und um die rheologischen und coloristischen Eigenschaften der Pigmente zu verbessern. Dadurch kann beispielsweise die Farbstärke, die Transparenz und der Glanz in vielen Anwendungen erhöht werden.

Zur Herstellung von Farbfiltern werden besonders feinteilige Pigmente eingesetzt, um die Partikel-Streuung, die zu einer Herabsetzung des Kontrastverhältnisses führt, weitgehend auszuschließen.

WO 01/04215 offenbart ein feinteiliges Diketopyrrolopyrrolpigment, C.I. Pigment Red 254 (I), 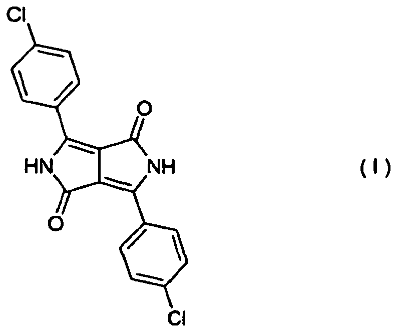 das durch eine besonders enge Teilchengrößenverteilung gepaart mit hoher Kristallinität und einer speziellen Absorptionscharakteristik gekennzeichnet ist. Ein solches C.I. Pigment Red 254 kann erhalten werden, indem ein Rohpigment zunächst mit einem anorganischen Salz trocken bei mindestens 80 °C gerührt und anschließend einem Knetprozess mit anorganischen Salzen in Gegenwart von organischen Lösungsmitteln ausgesetzt wird.

Basierend auf diesen bekannten Verfahren sind Handelsprodukte erhältlich, die für die Anwendungen, in denen hohe Transparenz erforderlich ist, beispielsweise in Farbfiltern, empfohlen werden. Dennoch genügen diese Pigmente nicht immer allen Anforderungen der Technik. Insbesondere bestand noch ein Verbesserungsbedarf hinsichtlich der Transparenz, Dispergierbarkeit und Rheologie.

Die EP-A1-1104789, EP-B1-1 362 081 und JP 03026767 beschreiben Pigmentdispergatoren auf Basis von Pigmenten, wie z.B. von Diketopyrrolopyrrolen oder Chinacridonen.

DE 102 35 573 A1 offenbart eine Pigmentzusammensetzung , die neben dem Pigment P.R 254 im Diketopyrrolopyrrol-Derivat als Dispergator enthält.

Es bestand die Aufgabe, Pigmentzubereitungen mit C.I. Pigment Red 254 als Basispigment zur Verfügung zu stellen, die hohe Farbstärke, niedrige Viskosität und möglichst geringe Farbtonabweichung vom Basispigment C.I. Pigment Red 254 aufweisen und insbesondere für Farbfilteranwendungen geeignet sind.

Es wurde gefunden, dass Pigmentzubereitungen auf Basis von C.I. Pigment Red 254 mit bestimmter Teilchengröße und den nachstehend definierten Pigmentdispergatoren diese Aufgabe lösen, obwohl aufgrund der Coloristik der Einzelverbindungen eine deutlich größere Farbtonabweichung zu erwarten gewesen wäre.

Gegenstand der Erfindung sind Pigmentzubereitungen, gekennzeichnet durch einen Gehalt von C.I. Pigment Red 254 mit einer mittleren Teilchengröße d₅₀ von 20 bis 100 nm, und mindestens einem Pigmentdispergator der Formel (II) 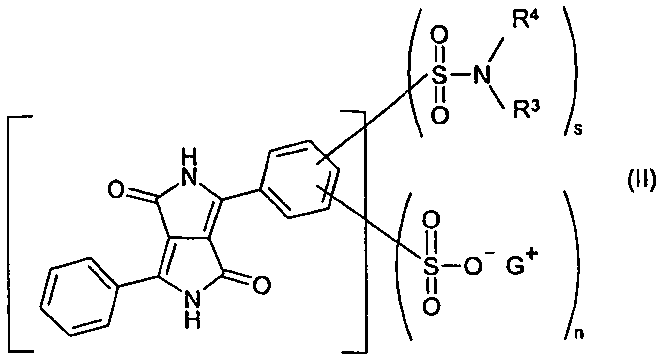 worin
s eine Zahl von 1 bis 5, vorzugsweise 1 bis 3, darstellt;
n eine Zahl von 0 bis 4, vorzugsweise 0 bis 2, darstellt; wobei die Summe von s und n 1 bis 5 beträgt;
R³ Phenyl-NR⁵R⁶, Phenyl-COO⁻E⁺, Phenyl-SO₃⁻E⁺, C₁-C₆-Alkyl-NR⁵R⁶, C₁-C₆-Alkyl-SO₃⁻E⁺ oder C₁-C₆Alkyl-COO⁻E⁺, wobei R⁵ und R⁶ gleich oder verschieden sind und Wasserstoff, Phenyl oder C₁-C₆-Alkyl bedeuten;
R⁴ Wasserstoff, C₁-C₆-Alkyl, Benzyl oder Phenyl,
E⁺, G⁺ unabhängig voneinander Wasserstoff, ein Erdalkalimetall, ein Alkalimetall oder ein Metall der dritten Hauptgruppe, insbesondere Li, Na, K, Ca, Sr, Ba, Al, bedeuten.

Die Pigmentdispergatoren der Formel (II) sind an sich bekannte Verbindungen und lassen sich nach bekannten Verfahren herstellen, z.B. nach JP 03026767 oder EP-B1-1 362 081.

In den erfindungsgemäßen Pigmentzubereitungen ist das Gewichtsverhältnis von C.I. Pigment Red 254 zum Pigmentdispergator der Formel (II) bevorzugt zwischen (99,9 zu 0,1) und (80 zu 20), besonders bevorzugt zwischen (99 zu 1) und (83 zu 17), insbesondere zwischen (98 zu 2) und (85 zu 15), und ganz besonders bevorzugt zwischen (96 zu 4) und (88 zu 12).

Für eine Mischung der Komponenten C. I. Pigment Red 254 und dem erfindungsgemäßen Pigmentdispergator im beanspruchten Mengenverhältnis wäre eine Abweichung von ΔH und ΔC jeweils größer als 3,0 zu erwarten. Chroma (C) ist der Parameter, der die Buntheit der Farbe bei gegebener Helligkeit beschreibt, ΔC beschreibt die Differenz in der Buntheit von zwei Farben. Analog beschreibt ΔH den Unterschied im Farbton bei zwei zu vergleichenden Farben. Überraschenderweise zeigte sich jedoch, dass eine Färbung nach DIN EN ISO 787-26 mit 1/3 Standard-Farbtiefe im Alkyd/Melaminharz-Lacksystem mit einer erfindungsgemäßen Pigmentzubereitung im Vergleich zu einer Färbung mit reinem C.I. PR 254 und gleicher Teilchengröße ein ΔH (nach CIELAB) von vorzugsweise nicht mehr als 2,0, insbesondere nicht mehr als 1,5 und besonders bevorzugt von nicht mehr als 1,0 aufweist. Vorzugsweise ist das ΔC (nach CIELAB) nicht größer als 2,0, insbesondere nicht größer als 1,5 und besonders bevorzugt nicht größer als 1,0.

Die erfindungsgemäßen Pigmentzubereitungen sind vorzugsweise hochkristallin, gekennzeichnet durch eine Halbwertsbreite HWB des Hauptpeaks von 0,2 bis 0,7 °2Theta, insbesondere von 0,3 bis 0,5 °2Theta, im Röntgenpulverdiffraktogramm mit CuKₐₗₚₕₐ Strahlung.

Die erfindungsgemäßen Pigmentzubereitungen enthalten das Basispigment mit einer mittleren Teilchengröße d₅₀ von 20 bis 100 nm, vorzugsweise 30 bis 80 nm, insbesondere 30 bis 60 nm. Die Teilchengrößenverteilung von C.I. Pigment Red 254 ist vorzugsweise einer Gauss-Verteilung angenähert, in der die Standardabweichung Sigma vorzugsweise kleiner als 40 nm, besonders bevorzugt kleiner als 30 nm, ist. In der Regel liegen die Standardabweichungen zwischen 5 und 40 nm, vorzugsweise zwischen 10 und 30 nm.

Die erfindungsgemäßen Pigmentzubereitungen haben überraschenderweise eine sehr geringe Viskosität, vorzugsweise eine Viskosität von 3 bis 50 mPa·s, gemessen bei 20 °C mit einem Kegel-Platte-Viskosimeter, z.B. RS75 der Fa. Haake.

Die erfindungsgemäßen Pigmentzubereitungen können neben dem Diketopyrrolopyrrolpigment und dem Pigmentdispergator noch weitere übliche Hilfsmittel oder Zusatzstoffe enthalten, wie beispielsweise Tenside, Dispergiermittel, Füllstoffe, Stellmittel, Harze, Wachse, Entschäumer, Antistaubmittel, Extender, Antistatika, Konservierungsmittel, Trocknungsverzögerungsmittel, Netzmittel, Antioxidantien, UV-Absorber und Lichtstabilisatoren, vorzugsweise in einer Menge von 0,1 bis 10 Gew.-%, insbesondere 0,5 bis 5 Gew.-%, bezogen auf das Gesamtgewicht der Pigmentzubereitung.

Als Tenside kommen anionische oder anionaktive, kationische oder kationaktive und nichtionische oder amphotere Substanzen oder Mischungen dieser Mittel in Betracht.

Als anionaktive Substanzen kommen beispielsweise Fettsäuretauride, FettsäureN-methyltauride, Fettsäureisethionate, Alkylphenylsulfonate, beispielsweise Dodecylbenzolsulfonsäure, Alkylnaphthalinsulfonate, Alkylphenolpolyglykolethersulfate, Fettalkoholpolyglykolethersulfate, Fettsäureamid-polyglykolethersulfate, Alkylsulfosuccinamate, Alkenylbernsteinsäurehalbester, Fettalkoholpolyglykol-ethersulfosuccinate, Alkansulfonate, Fettsäureglutamate, Alkylsulfosuccinate, Fettsäuresarkoside; Fettsäuren, beispielsweise Palmitin-, Stearin- und Ölsäure; die Salze dieser anionischen Substanzen und Seifen, beispielsweise Alkalisalze von Fettsäuren, Naphthensäuren und Harzsäuren, beispielsweise Abietinsäure, alkalilösliche Harze, beispielsweise kolophoniummodifizierte Maleinatharze und Kondensationsprodukte auf Basis von Cyanurchlorid, Taurin, N,N'-Diethylamino-propylamin und p-Phenylendiamin in Betracht. Bevorzugt sind Harzseifen, d.h. Alkalisalze von Harzsäuren.

Als kationaktive Substanzen kommen beispielsweise quaternäre Ammoniumsalze, Fettaminoxalkylate, Polyoxyalkylenamine, oxalkylierte Polyamine, Fettaminpolyglykolether, primäre, sekundäre oder tertiäre Amine, beispielsweise Alkyl-, Cycloalkyl oder cyclisierte Alkylamine, insbesondere Fettamine, von Fettaminen oder Fettalkoholen abgeleitete Di- und Polyamine und deren Oxalkylate, von Fettsäuren abgeleitete Imidazoline, Polyaminoamido- oder Polyaminoverbindungen oder -harze mit einem Aminindex zwischen 100 und 800 mg KOH pro g der Polyaminoamido- oder Polyaminoverbindung, und Salze dieser kationenaktiven Substanzen, wie beispielsweise Acetate oder Chloride, in Betracht.

Als nichtionogene und amphotere Substanzen kommen beispielsweise Fettamincarboxyglycinate, Aminoxide, Fettalkoholpolyglykolether, Fettsäurepolyglykolester, Betaine, wie Fettsäureamid-N-propyl-betaine, Phosphorsäureester von aliphatischen und aromatischen Alkoholen, Fettalkoholen oder Fettalkoholpoly-glykolethern, Fettsäureamidethoxylate, Fettalkohol-alkylenoxid-Addukte und Alkylphenolpolyglykolether in Betracht.

Mit nichtpigmentären Dispergiermitteln sind Substanzen gemeint, die strukturell nicht von organischen Pigmenten abgeleitet sind. Sie werden als Dispergiermittel entweder bereits bei der Herstellung von Pigmenten, oft aber auch bei der Einarbeitung der Pigmente in die zu färbenden Anwendungsmedien, beispielsweise bei der Herstellung von Colorfiltem durch Dispergierung der Pigmente in den entsprechenden Bindemitteln, zugegeben. Es können polymere Substanzen sein, beispielsweise Polyolefine, Polyester, Polyether, Polyamide, Polyimine, Polyacrylate, Polyisocyanate, Blockcopolymere daraus, Copolymere aus den entsprechenden Monomeren oder Polymere einer Klasse, die mit wenigen Monomeren einer anderen Klasse modifiziert sind. Diese polymeren Substanzen tragen polare Ankergruppen wie beispielsweise Hydroxy-, Amino-, Imino- und Ammoniumgruppen, Carbonsäure- und Carboxylatgruppen, Sulfonsäure- und Sulfonatgruppen oder Phosphonsäure- und Phosphonatgruppen, und können auch mit aromatischen, nicht pigmentären Substanzen modifiziert sein. Nichtpigmentäre Dispergiermittel können des Weiteren auch chemisch mit funktionellen Gruppen modifizierte aromatische, nicht von organischen Pigmenten abgeleitete Substanzen sein. Derartige nichtpigmentäre Dispergiermittel sind dem Fachmann bekannt und zum Teil im Handel erhältlich (z.B. Solsperse^{®}, Avecia; Disperbyk^{®}, Byk-Chemie, Efka^{®}, Efka). Es sollen im Folgenden stellvertretend einige Typen genannt werden, zum Einsatz können jedoch prinzipiell beliebige andere, beschriebene Substanzen kommen, beispielsweise Kondensationsprodukte aus Isocyanaten und Alkoholen, Di- oder Polyolen, Aminoalkoholen oder Di- oder Polyaminen, Polymere aus Hydroxycarbonsäuren, Copolymere aus Olefinmonomeren oder Vinylmonomeren und ethylenisch ungesättigten Carbonsäuren und -estern, urethanhaltige Polymere von ethylenisch ungesättigten Monomeren, urethanmodifizierte Polyester, Kondensationsprodukte auf Basis von Cyanurhalogeniden, Nitroxylverbindungen enthaltende Polymere, Polyesteramide, modifizierte Polyamide, modifizierte Acrylpolymere, Dispergiermittel mit kammartiger Struktur aus Polyestern und Acrylpolymeren, Phosphorsäureester, von Triazin abgeleitete Polymere, modifizierte Polyether, oder von aromatischen, nichtpigmentären Substanzen abgeleitete Dispergiermittel. Dabei werden diese Grundstrukturen vielfach weiter modifiziert, beispielsweise durch chemische Umsetzung mit weiteren, funktionelle Gruppen tragenden Substanzen oder durch Salzbildung. Die erfindungsgemäße Pigmentzubereitung kann als vorzugsweise wässriger Presskuchen oder Feuchtgranulat zum Einsatz kommen, in der Regel handelt es sich jedoch um feste Systeme von pulverförmiger Beschaffenheit.

Gegenstand der Erfindung ist auch ein Verfahren zur Herstellung einer erfindungsgemäßen Pigmentzubereitung, dadurch gekennzeichnet, dass man C.I. Pigment Red 254 vor oder während einer Feinverteilung, wie z.B. einer Knetung, Nassmahlung oder Trockenmahlung, oder unmittelbar vor oder während einer Finishbehandlung mit dem Pigmentdispergator der Formel (II) versetzt.

Beispielsweise können die trockenen Komponenten in Granulat- oder Pulverform vor oder nach einer Mahlung gemischt werden; die eine Komponente kann zur anderen Komponente in feuchter oder trockener Form zugegeben werden, beispielsweise durch Mischen der Komponenten in Form der feuchten Presskuchen.

Das Mischen kann beispielsweise durch eine Mahlung in trockener Form, in feuchter Form, beispielsweise durch Knetung, oder in Suspension erfolgen, oder durch eine Kombination dieser Verfahren. Die Mahlung kann unter Zusatz von Wasser, Lösemitteln, Säuren oder Mahlhilfsmitteln wie Salz durchgeführt werden. Eine Knetung, die zur Feinverteilung der Pigmentkristalle führt, ist insbesondere eine Salzknetung in Gegenwart eines organischen Lösemittels.

Das Mischen kann auch durch Zugabe des Pigmentdispergators während des Herstellungsprozess des C. I. Pigment Red 254 erfolgen.

Die Zugabe des Pigmentdispergators zum C. I. Pigment Red 254 erfolgt aber vorzugsweise nach der chemischen Bildung des C. I. Pigment Red 254 und vor oder während der Bildung der feinen Teilchen.

Besonders bevorzugt erfolgt die Zugabe des Pigmentdispergators zum Diketopyrrolopyrrolpigment während einer Trocken- oder Nassmahlung. Die dabei gebildete feinkristalline Pigmentzubereitung kann einer Nachbehandlung, im allgemeinen als Finish bezeichnet, unterworfen werden, beispielsweise in Wasser und/oder Lösemitteln und meist unter erhöhter Temperatur, beispielsweise bis 200 °C, und ggf. erhöhtem Druck. Der Pigmentdispergator kann auch nach der Trocken- oder Nassmahlung, aber vor oder während des Finishs zugegeben werden. Selbstverständlich kann der Pigmentdispergator auch in Teilportionen zu unterschiedlichen Zeiten zugegeben werden.

Bei der Trocknung einer feuchten Pigmentzubereitung können die bekannten Trockenaggregate zum Einsatz kommen, wie Trockenschränke, Schaufelradtrockner, Taumeltrockner, Kontakttrockner und insbesondere Spinflash- und Sprühtrockner.

Gegenstand der Erfindung ist auch eine Pigmentzubereitung, erhältlich nach vorstehend beschriebenem Verfahren.

Die erfindungsgemäßen Pigmentzubereitungen zeichnen sich aus durch ihre hervorragenden coloristischen und rheologischen Eigenschaften, insbesondere hohe Flockungsstabilität, leichte Dispergierbarkeit, gute Rheologie, hohe Farbstärke, Transparenz und Sättigung (Chroma). Sie sind in vielen Anwendungsmedien leicht und bis zu hohen Feinheiten dispergierbar. Solche Pigmentdispersionen zeigen hervorragende rheologische Eigenschaften selbst bei hoher Pigmentierung der Lack- oder Druckfarbenkonzentrate. Auch andere Eigenschaften, wie beispielsweise Glanz, Überlackierechtheit, Lösemittelechtheit, Alkali- und Säureechtheit, Licht- und Wetterechtheiten und hohe Reinheit des Farbtons, sind sehr gut. Außerdem lassen sich mit den erfindungsgemäßen Pigmentzubereitungen Farbtöne im roten Bereich erzielen, die beim Einsatz in Farbfiltern gefragt sind. Hier sorgen sie für hohen Kontrast und genügen auch den sonstigen, beim Einsatz in Color Filtern gestellten Anforderungen, wie hohe Temperaturstabilität oder steile und schmale Absorptionsbanden. Sie können mit hoher Reinheit und niedrigen Gehalten an Ionen hergestellt werden.

Die erfindungsgemäßen Pigmentzubereitungen lassen sich prinzipiell zum Pigmentieren von allen hochmolekularen organischen Materialien natürlicher oder synthetischer Herkunft einsetzen, beispielsweise von Kunststoffen, Harzen, Lacken, insbesondere Metallic-Lacken, Anstrichfarben, elektrophotographischen Tonern und Entwicklern, Elektretmaterialien, Farbfiltern sowie von Tinten, Druckfarben.

Hochmolekulare organische Materialien, die mit den erfindungsgemäßen Pigmentzubereitungen pigmentiert werden können, sind beispielsweise Celluloseverbindungen, wie beispielsweise Celluloseether und -ester, wie Ethylcellulose, Nitrocellulose, Celluloseacetate oder Cellulosebutyrate, natürliche Bindemittel, wie beispielsweise Fettsäuren, fette Öle, Harze und deren Umwandlungsprodukte, oder Kunstharze, wie Polykondensate, Polyaddukte, Polymerisate und Copolymerisate, wie beispielsweise Aminoplaste, insbesondere Harnstoff- und Melaminformaldehydharze, Alkydharze, Acrylharze, Phenoplaste und Phenolharze, wie Novolake oder Resole, Harnstoffharze, Polyvinyle, wie Polyvinylalkohole, Polyvinylacetale, Polyvinylacetate oder Polyvinylether, Polycarbonate, Polyolefine, wie Polystyrol, Polyvinylchlorid, Polyethylen oder Polypropylen, Poly(meth)acrylate und deren Copolymerisate, wie Polyacrylsäureester oder Polyacrylnitrile, Polyamide, Polyester, Polyurethane, Cumaron-Inden- und Kohlenwasserstoffharze, Epoxidharze, ungesättigte Kunstharze (Polyester, Acrylate) mit den unterschiedlichen Härtemechanismen, Wachse, Aldehyd- und Ketonharze, Gummi, Kautschuk und seine Derivate und Latices, Casein, Silikone und Silikonharze; einzeln oder in Mischungen.

Dabei spielt es keine Rolle, ob die erwähnten hochmolekularen organischen Verbindungen als plastische Massen, Schmelzen oder in Form von Spinnlösungen, Dispersionen, Lacken, Anstrichstoffen oder Druckfarben vorliegen. Je nach Verwendungszweck erweist es sich als vorteilhaft, die erfindungsgemäßen Pigmentzubereitungen als Blend oder in Form von Präparationen oder Dispersionen zu benutzen.

Es ist auch möglich, die Pigmentzubereitung erst bei der Einarbeitung in das hochmolekulare organische Medium herzustellen.

Gegenstand der vorliegenden Erfindung ist daher auch ein hochmolekulares organisches Material, enthaltend eine färberisch wirksame Menge einer erfindungsgemäßen Pigmentzubereitung.

Bezogen auf das zu pigmentierende, hochmolekulare organische Material setzt man die erfindungsgemäße Pigmentzubereitung meist in einer Menge von 0,01 bis 30 Gew.-%, vorzugsweise 0,1 bis 20 Gew.-%, ein. Für FarbfilterAnwendungen können auch höhere Farbmittelkonzentrationen zum Einsatz kommen.

Die erfindungsgemäßen Pigmentzubereitungen sind auch geeignet als Farbmittel in elektrophotographischen Tonern und Entwicklern, wie beispielsweise Ein- oder Zweikomponentenpulvertonern (auch Ein- oder Zweikomponenten-Entwickler genannt), Magnettoner, Flüssigtoner, Polymerisationstoner sowie Spezialtoner. Typische Tonerbindemittel sind Polymerisations-, Polyadditions- und Polykondensationsharze, wie Styrol-, Styrolacrylat-, Styrolbutadien-, Acrylat-, Polyester-, Phenol-Epoxidharze, Polysulfone, Polyurethane, einzeln oder in Kombination, sowie Polyethylen und Polypropylen, die noch weitere Inhaltsstoffe, wie Ladungssteuermittel, Wachse oder Fließhilfsmittel, enthalten können oder im nachhinein mit diesen Zusätzen modifiziert werden.

Des Weiteren sind die erfindungsgemäßen Pigmentzubereitungen geeignet als Farbmittel in Pulvern und Pulverlacken, insbesondere in triboelektrisch oder elektrokinetisch versprühbaren Pulverlacken, die zur Oberflächenbeschichtung von Gegenständen aus beispielsweise Metall, Holz, Kunststoff, Glas, Keramik, Beton, Textilmaterial, Papier oder Kautschuk zur Anwendung kommen. Außerdem sind die erfindungsgemäßen Pigmentzubereitungen als Farbmittel in Ink-Jet Tinten auf wässriger und nichtwässriger Basis sowie in solchen Tinten, die nach dem Hot-melt-Verfahren arbeiten, geeignet.

Ink-Jet-Tinten enthalten im Allgemeinen insgesamt 0,5 bis 15 Gew.-%, vorzugsweise 1,5 bis 8 Gew.-%, (trocken gerechnet) der erfindungsgemäßen Pigmentzubereitung.

Mikroemulsionstinten basieren auf organischen Lösemitteln, Wasser und ggf. einer zusätzlichen hydrotropen Substanz (Grenzflächenvermittler).

Mikroemulsionstinten enthalten im Allgemeinen 0,5 bis 15 Gew.-%, vorzugsweise 1,5 bis 8 Gew.-%, der erfindungsgemäßen Pigmentzubereitung, 5 bis 99 Gew.-% Wasser und 0,5 bis 94,5 Gew.-% organisches Lösungsmittel und/oder hydrotrope Verbindung.

"Solvent based" Ink-Jet-Tinten enthalten vorzugsweise 0,5 bis 15 Gew.-% der erfindungsgemäßen Pigmentzubereitung, 85 bis 99,5 Gew.-% organisches Lösungsmittel und/oder hydrotrope Verbindungen.

Hot-Melt-Tinten basieren meist auf Wachsen, Fettsäuren, Fettalkoholen oder Sulfonamiden, die bei Raumtemperatur fest sind und bei Erwärmen flüssig werden, wobei der bevorzugte Schmelzbereich zwischen ca. 60 °C und ca. 140 °C liegt. Hot-Melt Ink-Jet-Tinten bestehen z.B. im Wesentlichen aus 20 bis 90 Gew.-% Wachs und 1 bis 10 Gew.-% der erfindungsgemäßen Pigmentzubereitung. Weiterhin können 0 bis 20 Gew.-% eines zusätzlichen Polymers (als "Farbstofflöser"), 0 bis 5 Gew.-% Dispergierhilfsmittel, 0 bis 20 Gew.-% Viskositätsveränderer, 0 bis 20 Gew.-% Plastifizierer, 0 bis 10 Gew.-% Klebrigkeitszusatz, 0 bis 10 Gew.-% Transparenzstabilisator (verhindert z.B. Kristallisation der Wachse) sowie 0 bis 2 Gew.-% Antioxidans enthalten sein.

Insbesondere sind die erfindungsgemäßen Pigmentzubereitungen als Farbmittel für Farbfilter, sowohl für die additive wie auch für die subtraktive Farberzeugung, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder light-emitting diodes sein können, sowie als Farbmittel für elektronische Tinten ("electronic inks" bzw. "e-inks") oder "electronic paper" ("e-paper") geeignet.

Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z.B. TFT-LCD = Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einen pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Die Rotfarbtöne der erfindungsgemäßen Pigmentzubereitungen sind ganz besonders gut geeignet für den Color Filter Farbset Rot-Grün-Blau (R,G,B). Diese drei Farben liegen als getrennte Farbpunkte nebeneinander vor, und ergeben von hinten durchleuchtet ein Vollfarbbild.

Typische Farbmittel für den roten Farbpunkt sind Pyrrolopyrrol-, Chinacridon- und Azopigmente, wie z.B. C.I. Pigment Red 254, C.I. Pigment Red 209, C.I. Pigment Red 175 und C.I. Pigment Orange 38, einzeln oder gemischt. Für den grünen Farbpunkt werden typischerweise Phthalocyaninfarbmittel eingesetzt, wie z.B. C.I. Pigment Green 36 und C.I. Pigment Green 7.

Bei Bedarf können den jeweiligen Farbpunkten noch weitere Farben zum Nuancieren zugemischt werden. Für den Rot- und Grünfarbton wird bevorzugt mit Gelb abgemischt, zum Beispiel mit C.I. Pigment Yellow 138,139,150,151,180 und 213.

In den folgenden Beispielen bedeuten Prozentangaben Gewichtsprozente und Teile Gewichtsteile, sofern nicht anders angegeben.

### Beispiel 1: Perlmahlung von C. I. Pigment Red 254 in Gegenwart von 10 % des Pigmentdispergators

Ein Gemisch aus 70 Teilen P.R. 254, 1,4 Teilen eines handelsüblichen Fließverbesserers auf Naphthalinsulfonsäure-Basis, 800 Teilen Zirkonoxid-Perlen (0.4-0.6 mm), 600 Teilen Wasser und 7 Teilen eines Pigmentdispergators der Formel (IV), 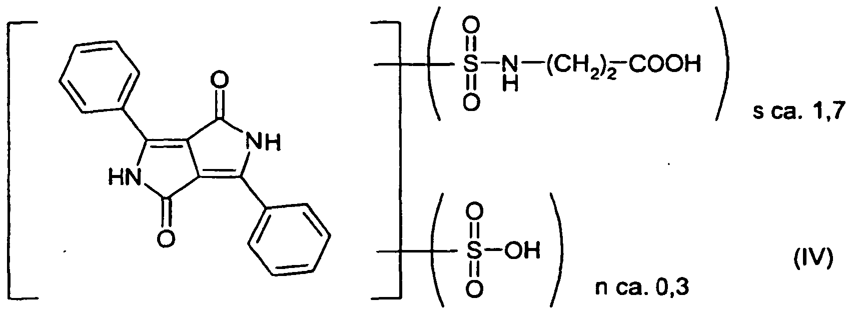 der analog EP 1362081 hergestellt wurde, wird in einer Drais^{®} Advantis V3-Mühle gemahlen. Die Mahldauer entspricht fünf bis sechs theoretischen Mahlpassagen. Das Mahlgut wird von den Perlen getrennt, filtriert und der Filterkuchen mit einer 1:1-Mischung aus Wasser und Isobutanol bei pH 2 für 2 h zum Rückfluss erhitzt. Nach einer Wasserdampfdestillation wird abfiltriert, mit Wasser salzfrei gewaschen, im Vakuum getrocknet und abschließend pulverisiert. Man erhält eine rote Pigmentzubereitung mit einer mittleren Teilchengröße d₅₀ von 35 nm (TEM).

### Beispiel 2: Perlmahlung von C. I. Pigment Red 254 und Zugabe von 10 % des Pigmentdispergators vor einer Lösungsmittelbehandlung

Ein Gemisch aus 90 Teilen P.R. 254, 1,8 Teilen eines handelsüblichen Fließverbesserers auf Naphthalinsulfonsäure-Basis und 800 Teilen Wasser wird homogen angeteigt und mit einer Drais^{®} Advantis V3-Mühle in Gegenwart von 800 Teilen Zirkonoxid-Perlen (0.4-0.6 mm) gemahlen. Die Mahldauer entspricht fünf bis sechs theoretischen Mahlpassagen. 740 Teile der etwa 10 %igen Mahlsuspension werden mit 7,4 Teilen eines Pigmentdispergators (IV) und Isobutanol versetzt, so dass eine 1:1-Mischung aus Isobutanol und Wasser entsteht. Die Suspension wird bei pH 2 für 2 h zum Rückfluss erhitzt, nach der Abtrennung des Isobutanols durch Wasserdampfdestillation abfiltriert, mit Wasser salzfrei gewaschen, im Vakuum getrocknet und abschließend pulverisiert. Man erhält eine rote Pigmentzubereitung mit einer mittleren Teilchengröße d₅₀ von 41 nm (TEM).

### Beispiel 3: Perimahlung von C. I. Pigment Red 254 in Gegenwart von 5 % des Pigmentdispergators

Es wird analog Beispiel 1 verfahren, wobei jedoch statt 7 Teile nur 3,5 Teile eines Pigmentdispergators der Formel (IV) eingesetzt werden. Man erhält eine rote Pigmentzubereitung mit einer mittleren Teilchengröße d₅₀ von 37 nm (TEM).

### Beispiel 4: Perlmahlung von C. I. Pigment Red 254 und Zugabe von 5 % des Pigmentdispergators vor einer Lösungsmittelbehandlung

Es wird analog Beispiel 2 verfahren, wobei jedoch statt 7,4 Teile nur 3,7 Teile eines Pigmentdispergators der Formel (IV) eingesetzt werden. Man erhält eine rote Pigmentzubereitung mit einer mittleren Teilchengröße d₅₀ von 39 nm (TEM).

### Beispiel 5: Perlmahlung von C. I. Pigment Red 254 in Gegenwart von 10 % des Pigmentdispergators

Es wird analog dem Beispiel 1 verfahren, wobei jedoch ein Pigmentdispergator der Formel (V) eingesetzt wird, der analog EP 1362081 hergestellt wurde.

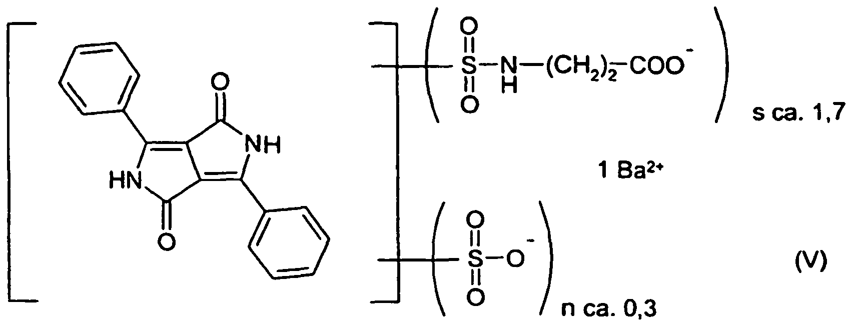

Man erhält eine rote Pigmentzubereitung mit einer mittleren Teilchengröße d₅₀ von 62 nm (TEM).

### Beispiel 6: Perlmahlung von C. I. Pigment Red 254 und Zugabe von 10 % des Pigmentdispergators vor einer Lösungsmittelbehandlung

Es wird analog dem Beispiel 2 verfahren, wobei jedoch ein Pigmentdispergator der Formel (V) eingesetzt wird.

Man erhält eine rote Pigmentzubereitung mit einer mittleren Teilchengröße d₅₀ von 46 nm (TEM).

### Beispiel 7: Perlmahlung von C. I. Pigment Red 254 in Gegenwart von 5 % des Pigmentdispergators

Es wird analog Beispiel 5 verfahren, wobei jedoch statt 7 Teile nur 3,5 Teile eines Pigmentdispergators der Formel (V) eingesetzt werden. Man erhält eine rote Pigmentzubereitung mit einer mittleren Teilchengröße d₅₀ von 48 nm (TEM).

### Beispiel 8: Perlmahlung von C. I. Pigment Red 254 und Zugabe von 5 % des Pigmentdispergators vor einer Lösungsmittelbehandlung

Es wird analog Beispiel 6 verfahren, wobei jedoch statt 7,4 Teile nur 3,7 Teile eines Pigmentdispergators der Formel (V) eingesetzt werden. Man erhält eine rote Pigmentzubereitung mit einer mittleren Teilchengröße d₅₀ von 59 nm (TEM).

### Beispiel 9: Perlmahlung von C. I. Pigment Red 254 in Gegenwart von 10 % des Pigmentdispergators

Es wird analog dem Beispiel 1 verfahren, wobei jedoch ein Pigmentdispergator der Formel (VI) eingesetzt wird, welcher analog JP 03026767 hergestellt wurde.

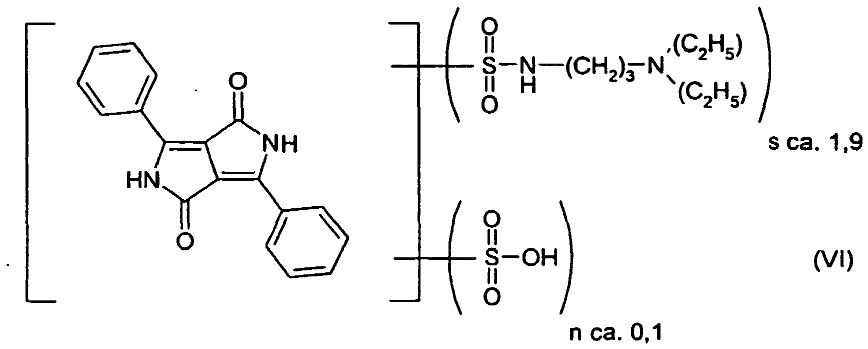

Man erhält eine rote Pigmentzubereitung mit einer mittleren Teilchengröße d₅₀ von 49 nm (TEM).

### Beispiel 10: Perlmahlung von C. I. Pigment Red 254 und Zugabe von 10 % des Pigmentdispergators vor einer Lösungsmittelbehandlung

Es wird analog dem Beispiel 2 verfahren, wobei jedoch ein Pigmentdispergator der Formel (VI) eingesetzt wird. Man erhält eine rote Pigmentzubereitung mit einer mittleren Teilchengröße d₅₀ von 60 nm (TEM).

### Beispiel 11: Perimahlung von C. I. Pigment Red 254 in Gegenwart von 5 % des Pigmentdispergators

Es wird analog Beispiel 9 verfahren, wobei jedoch statt 7 Teile nur 3,5 Teile eines Pigmentdispergators der Formel (VI) eingesetzt werden. Man erhält eine rote Pigmentzubereitung mit einer mittleren Teilchengröße d₅₀ von 51 nm (TEM).

### Beispiel 12: Perlmahlung von C. I. Pigment Red 254 und Zugabe von 5 % des Pigmentdispergators vor einer Lösungsmittelbehandlung

Es wird analog Beispiel 10 verfahren, wobei jedoch statt 7,4 Teile nur 3,7 Teile eines Pigmentdispergators der Formel (VI) eingesetzt werden. Man erhält eine rote Pigmentzubereitung mit einer mittleren Teilchengröße d₅₀ von 56 nm (TEM)

### Beispiel 13: Salzknetung von C. I. Pigment Red 254 in Gegenwart von 10 % des Pigmentdispergators

Ein Gemisch aus 15 Teilen P.R. 254, 1,5 Teilen eines Pigmentdispergators (VI), 90 Teilen mikrokristallinem Natriumchlorid und 26 Teilen Diethylenglykol werden bei 80 °C für 24 Stunden auf einem Doppelmuldenkneter geknetet. Die Knetmasse wird für zwei Stunden bei 90 °C in 900 Teilen Salzsäure gerührt, der Feststoff abfiltriert, mit Wasser neutral gewaschen und getrocknet. Man erhält eine rote Pigmentzubereitung mit einer mittleren Teilchengröße d₅₀ von 45 nm (TEM).

### Beispiel 14: Salzknetung von C. I. Pigment Red 254 in Gegenwart von 5 % des Pigmentdispergators

Es wird analog Beispiel 13 verfahren, wobei jedoch statt 1,5 Teile nur 0,75 Teile eines Pigmentdispergators der Formel (VI) eingesetzt werden. Man erhält eine rote Pigmentzubereitung mit einer mittleren Teilchengröße d₅₀ von 49 nm (TEM).

### Vergleichsbeispiel A: Perimahlung von C. I. Pigment Red 254 ohne einen Pigmentdispergator

Ein Gemisch aus 90 Teilen P.R. 254, 1,8 Teilen eines handelsüblichen Fließverbesserers auf Naphthalinsulfonsäure-Basis und 800 Teilen Wasser wird homogen angeteigt und mit einer Drais^{®} Advantis V3-Mühle in Gegenwart von 800 Teilen Zirkonoxid-Perien (0,4-0,6 mm) gemahlen. Die Mahldauer entspricht fünf bis sechs theoretischen Mahlpassagen. Die Mahlsuspension wird mit Isobutanol versetzt, so dass eine 1:1-Mischung aus Isobutanol und Wasser entsteht. Die Suspension wird bei pH 2 für 2 h zum Rückfluss erhitzt, nach der Abtrennung des Isobutanols durch Wasserdampfdestillation abfiltriert, mit Wasser salzfrei gewaschen, im Vakuum getrocknet und abschließend pulverisiert. Man erhält eine rote Pigmentzubereitung mit einer mittleren Teilchengröße d₅₀ von 102 nm (TEM).

### Korngrößenverteilung der Proben:

Für die Teilchengrößenverteilung wird eine Serie elektronenmikroskopischer Aufnahmen verwendet. Die Primärteilchen werden visuell identifiziert. Die Fläche jeden Primärteilchens wird mit Hilfe eines graphischen Tabletts bestimmt. Aus der Fläche wird der Durchmesser des flächengleichen Kreises ermittelt. Die Häufigkeitsverteilung der so berechneten Äquivalentdurchmesser wird bestimmt und die Häufigkeiten in Volumenanteile umgerechnet und als Teilchengrößenverteilung dargestellt.

Die Standardverteilung ist ein Maß für die Breite der Verteilung. Je kleiner die Standardabweichung ist, desto schmaler ist die Teilchengrößenverteilung.

**Tabelle 1: Komgrößenverteilung und Standardabweichung**

| Probe | d₅₀ [nm] | Standardabweichung σ [nm] |
|---|---|---|
| Beispiel 1 | 35 | 11 |
| Beispiel 2 | 41 | 15 |
| Beispiel 3 | 37 | 13 |
| Beispiel 4 | 39 | 11 |
| Beispiel 5 | 62 | 21 |
| Beispiel 6 | 46 | 16 |
| Beispiel 7 | 48 | 25 |
| Beispiel 8 | 59 | 23 |
| Beispiel 9 | 49 | 14 |
| Beispiel 10 | 60 | 17 |
| Beispiel 11 | 51 | 26 |
| Beispiel 12 | 56 | 19 |
| Beispiel 13 | 45 | 12 |
| Beispiel 14 | 49 | 14 |
| Vergleichsbeispiel A | 102 | 42 |

### Kristallinität der Proben:

Die Größe der Halbwertsbreite der Reflexe im Röntgenpulverdiffraktogramm ist ein Maß für die Kristallinität der Proben. Je geringer die Halbwertsbreite, desto kristalliner ist das untersuchte Material. Unter Halbwertsbreite HWB versteht man die Breite des Reflexes in halber Höhe (Hälfte des Maximums) des jeweils größten Peaks (bei 28°).

Die Halbwertsbreite der Proben wird mit einem STOE /θ-Diffraktometer (Cu-K_{α}, U = 40 kV, I = 40 mA) gemessen (Blenden: primärseitig/vertikal 2 x 8 mm, primärseitig/ horizontal 1,0 mm, sekundärseitig 0,5 mm). Als Probenträger wird ein Standard-Stahlträger verwendet. Die Messzeit ist an die gewünschte statistische Sicherheit angepasst, der Winkelbereich 2θ beträgt in der Übersichtsmessung 5 - 30° und die Schrittweite 0,02° mit einer Zeitperiode von 3 s. Im Spezialbereich wird von 23 - 30° mit einer Schrittweite von 0,02° und einer Zeitperiode von 6 s gemessen.

Der Röntgenstrahl wird durch einen Graphit-Sekundärmonochromator monochromatisiert und mit einem Szintillationszähler unter kontinuierlicher Probendrehung vermessen. Zur Auswertung wird ein Profilfit über den gesamten Winkelbereich der zweiten Messung 28 = 23 - 30° durchgeführt (Fitfunktion: Lorentz² (4 Reflexe)).

**Tabelle 2: Kristallinität**

| Probe | Halbwertsbreite [°2θ ] (Hauptpeak) |
|---|---|
| Beispiel 1 | 0,36 |
| Beispiel 2 | 0,42 |
| Beispiel 3 | 0,41 |
| Beispiel 4 | 0,39 |
| Beispiel 5 | 0,44 |
| Beispiel 6 | 0,42 |
| Beispiel 7 | 0,48 |
| Beispiel 8 | 0,45 |
| Beispiel 9 | 0,43 |
| Beispiel 10 | 0,38 |
| Beispiel 11 | 0,41 |
| Beispiel 12 | 0,44 |
| Beispiel 13 | 0,53 |
| Beispiel 14 | 0,58 |

### Viskosität einer Mill-base für Colorfilter-Anwendungen:

10 g Pigment bzw. Pigmentzubereitung aus den vorher beschriebenen Beispielen werden in 73 g PGMEA (Propylenglykolmonomethyletheracetat) suspendiert, mit 17 g eines handelsüblichen, hochmolekularen Block-Copolymers und 250 g Zirkonoxidperlen (0.3 mm) versetzt und für drei Stunden im Paintshaker Disperse DAS 200 der Firma Lau GmbH, dispergiert.

Zur Bestimmung der Viskosität der Mill-Base wird ein Kegel-Platte Viskosimeter Haake RS75 bei 20 °C verwendet.

**Tabelle 3: Viskosität**

| Probe | Viskosität [mPa·s] |
|---|---|
| Beispiel 1 | 7 |
| Beispiel 2 | 6 |
| Beispiel 3 | 18 |
| Beispiel 4 | 16 |
| Beispiel 5 | 56 |
| Beispiel 6 | 65 |
| Beispiel 7 | 52 |
| Beispiel 8 | 61 |
| Beispiel 9 | 20 |
| Beispiel 10 | 42 |
| Beispiel 11 | 29 |
| Beispiel 12 | 38 |
| Beispiel 13 | 15 |
| Beispiel 14 | 12 |
| Vergleichsbeispiel A | 96 |

Die beschriebenen Pigmentzubereitungen werden mit Hilfe eines Spincoaters (POLOS Wafer Spinner) auf Glasplatten (SCHOTT, Laser-geschnitten, 10 x 10 cm) aufgetragen. Aufgrund der niedrigen Viskositäten erhält man brillante, hochtransparente, rote Ausfärbungen mit geringer Schichtdicke (500 bis 1300 nm) und sehr gutem Kontrastwert (TSUBOSAKAELECTRIC CO.,LTD, Modell CT-1), die vom Farbton der nicht-additivierten Proben nur wenig abweichen.

Die Pigmentzubereitungen aus Beispielen 1 bis 14 sind aufgrund ihres hohen Kontrastwertes für Colorfilteranwendungen gut geeignet.

### Anwendungsbeispiele für transparente Einbrenn-Lacke:

Zur Ermittlung der Farbstärke, der Buntheit ΔC und des Farbtons ΔH der Pigmentmischungen wurden die erhaltenen Pigmentzubereitungen in einem transparenten Alkyd-Melamin-Einbrennlacksystem vollständig dispergiert und ein Volltonlack erhalten. Anschließend wurde ein Aufhellungslack hergestellt, indem 6 Teile des Alkyd-Melamin-Volltonlacks mit 20 Teilen eines 30 %igen Weißlacks vermischt wurden.

Der erhaltene Aufhellungslack wurde zusammen mit dem Aufhellungslack der zu vergleichenden Probe nebeneinander auf eine weiße Pappkarte aufgezogen und nach 30 min Lufttrocknung für 30 min bei 140 °C eingebrannt. Die Farbstärke und ihre Messung ist definiert nach DIN EN ISO 787-26.

Die Farbstärken, Buntheit (Farbreinheit) und der Farbton der in den vorstehenden Beispielen hergestellten Pigmentzubereitungen sind in der nachfolgenden Tabelle angegeben.

Als Standard für die Farbstärke (100%), der Buntheit ΔC (Farbreinheit) (ΔC =0) und des Farbtons ΔH (AH =0) wurde das Pigment aus Vergleichsbeispiel A herangezogen.

**Tabelle 4: Coloristik**

| Probe | Farbstärke | ΔC | ΔH |
|---|---|---|---|
| Beispiel 1 | 116 % | -0,82 | 0,11 |
| Beispiel 2 | 108 % | -1,35 | -0,98 |
| Beispiel 3 | 114 % | -0,55 | -0,02 |
| Beispiel 4 | 106 % | -0,80 | -0,20 |
| Beispiel 5 | 97 % | -0,86 | -1,89 |
| Beispiel 6 | 102 % | -1,8 | -3,31 |
| Beispiel 7 | 100% | -0,68 | -1,68 |
| Beispiel 8 | 97 % | -0,90 | -1,50 |
| Beispiel 9 | 100 % | -1,48 | -1,39 |
| Beispiel 10 | 94 % | -1,59 | -2,32 |
| Beispiel 11 | 102 % | -1,10 | -1,20 |
| Beispiel 12 | 98 % | -0,98 | -1,43 |
| Beispiel 13 | 109% | -1,05 | 1,12 |
| Beispiel 14 | 105 % | -0,56 | 0,67 |
| Vergleichsbeispiel A | 100 % | 0,0 | 0,0 |

Für eine Mischung der Komponenten C. I. Pigment Red 254 und dem erfindungsgemäßen Pigmentdispergator in den beschriebenen Mengenverhältnissen wäre eine Abweichung von ΔH und ΔC jeweils größer als 2,0 bis 3,0 zu erwarten.

## Patentansprüche

1. Pigmentzubereitung, **gekennzeichnet durch** einen Gehalt von C.I. Pigment Red 254 mit einer mittleren Teilchengröße d₅₀ von 20 bis 100 nm, und mindestens einem Pigmentdispergator der Formel (II) 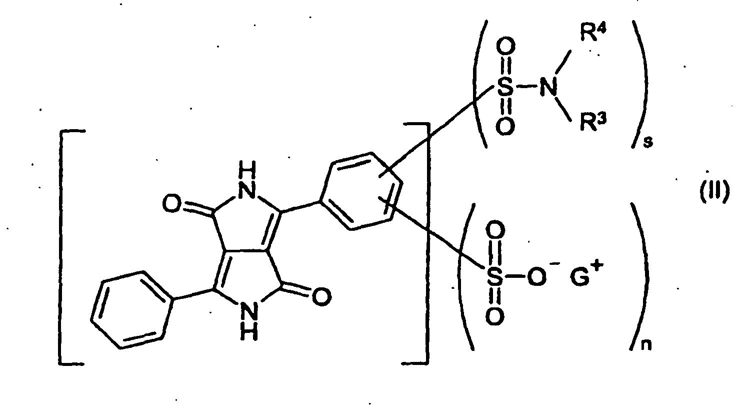 worin
s eine Zahl von 1 bis 5 darstellt;
n eine Zahl von 0 bis 4 darstellt; wobei die Summe von s und n 1 bis 5
beträgt;
R³ phenyl-NR⁵R⁶, Phenyl-COO⁻E⁺,
Phenyl-SO₃⁻E⁺, C₁-C₆-Alkyl-NR⁵R⁶, C₁-C₆-Alkyl-SO₃⁻E⁺ oder C₁-C₆-Alkyl-COO⁻E⁺, wobei R⁵ und R⁶ gleich oder verschieden sind und Wasserstoff, Phenyl oder C₁-C₆-Alkyl bedeuten;
R⁴ Wasserstoff, C₁-C₆-Alkyl, Benzyl oder Phenyl,
E⁺, G⁺ unabhängig voneinander Wasserstoff, ein Erdalkalimetall, ein Alkalimetall oder ein Metall der dritten Hauptgruppe bedeuten.

2. Pigmentzubereitung nach Anspruch1, **dadurch gekennzeichnet, dass** in der Verbindung der Formel (II) s eine Zahl von 1 bis 3, und n eine Zahl von 0 bis 2 bedeuten.

3. Pigmentzubereitung nach einem oder mehreren der Ansprüche 1 bis 2, **dadurch gekennzeichnet, dass** das Gewichtsverhältnis von C.I. Pigment Red 254 zum Pigmentdispergator der Formel (II) zwischen (99,9 zu 0,1) und (80 zu 20) liegt.

4. Pigmentzubereitung nach Anspruch 3, **dadurch gekennzeichnet, dass** das Gewichtsverhältnis von C.I. Pigment Red 254 zum Pigmentdispergator der Formel (II) zwischen (96 zu 4) und (88 zu 12) liegt.

5. Pigmentzubereitung nach einem oder mehreren der Ansprüche 1 bis 4, **gekennzeichnet durch** eine Halbwertsbreite HWB des Hauptpeaks von 0,2 bis 0,7 °2Theta im Röntgenpulverdiffraktogramm mit CuKₐₗₚₕₐ Strahlung.

6. Verfahren zur Herstellung einer Pigmentzubereitung nach einem oder mehreren der Ansprüche 1 bis 5, **dadurch gekennzeichnet, dass** man C.I. Pigment Red 254 vor oder während einer Feinverteilung oder Finishbehandlung mit dem Pigmentdispergator der Formel (II) versetzt.

7. Verwendung einer Pigmentzubereitung nach einem oder mehreren der Ansprüche 1 bis 5 zum Pigmentieren von hochmolekularen organischen Materialien natürlicher oder synthetischer Herkunft.

8. Verwendung nach Anspruch 7 zum Pigmentieren von Kunststoffen, Harzen, Lacken, Anstrichfarben, elektrophotographischen Tonern und Entwicklern, Tinten und Druckfarben.

9. Verwendung nach Anspruch 7 oder 8 zum Pigmentieren von Metallic-Lacken, Farbfiltern und Inkjet-Tinten.

## Claims

1. A pigment preparation comprising C.I. Pigment Red 254 having an average particle size d₅₀ of 20 to 100 nm and at least one pigment dispersant of the formula (II) 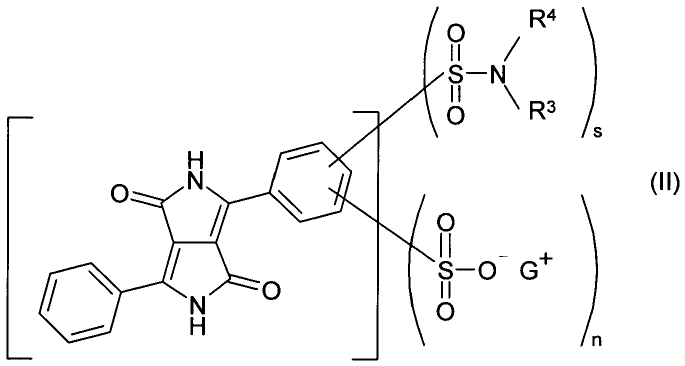 in which
s is a number from 1 to 5;
n is a number from 0 to 4; the sum of s and n being 1 to 5;
R³ is phenyl, phenyl-NR⁵R⁶, phenyl-COO⁻E⁺, phenyl-SO₃⁻ E⁺, C₁-C₆ alkyl-NR⁵R⁶, C₁-C₆ alkyl-SO₃⁻E⁺ or C₁-C₆ alkyl-COO⁻E⁺, with R⁵ and R⁶ being alike or different and being hydrogen, phenyl or C₁-C₆ alkyl;
R⁴ is hydrogen, C₁-C₆ alkyl, benzyl or phenyl, E⁺, G⁺ independently of one another are hydrogen, an alkaline earth metal, an alkali metal or a metal from main group three.

2. The pigment preparation as claimed in claim 1, wherein in the compound of the formula (II) s is a number from 1 to 3 and n is a number from 0 to 2.

3. The pigment preparation as claimed in one or more of claims 1 to 2, wherein the weight ratio of C.I. Pigment Red 254 to the pigment dispersant of the formula (II) is between (99.9:0.1) and (80:20).

4. The pigment preparation as claimed in claim 3, wherein the weight ratio of C.I. Pigment Red 254 to the pigment dispersant of the formula (II) is between (96:4) and (88:12).

5. The pigment preparation as claimed in one or more of claims 1 to 4, having a main-peak width at half peak height of 0.2 to 0.7°2theta in the X-ray powder diffractogram with CuKₐₗₚₕₐ radiation.

6. A process for preparing a pigment preparation as claimed in one or more of claims 1 to 5, which comprises admixing C.I. Pigment Red 254 with the pigment dispersant of the formula (II) before or during an operation of fine division or finishing treatment.

7. The use of a pigment preparation as claimed in one or more of claims 1 to 5 for pigmenting high molecular mass organic materials of natural or synthetic origin.

8. The use as claimed in claim 7 for pigmenting plastics, resins, varnishes, paints, electrophotographic toners and developers, and inks, including printing inks.

9. The use as claimed in claim 7 or 8 for pigmenting metallic varnishes, color filters, and inkjet inks.

## Revendications

1. Préparation pigmentaire, **caractérisée par** une teneur en pigment C. I. Rouge 254 avec une taille moyenne de particules d₅₀ de 20 à 100 nm, et au moins un dispersant de pigment de la formule (II) 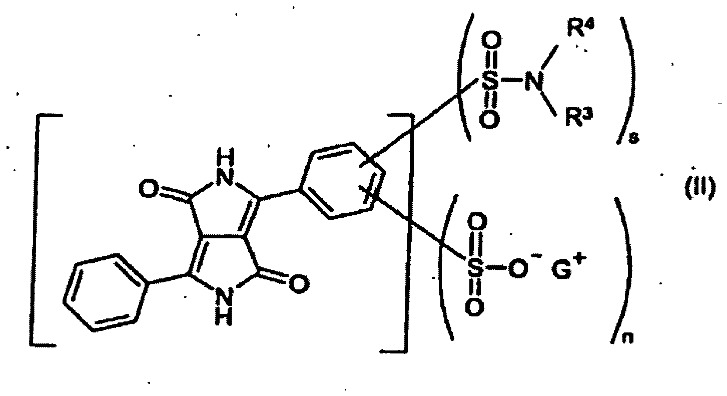 dans laquelle
s est un nombre de 1 à 5;
n est un nombre de 0 à 4; dans laquelle la somme de
s et n vaut de 1 à 5;
R³ est un phényle-NR⁵R⁶, phényle-COO⁻E⁺, phényle-SO₃⁻
E⁺, alkyle (C₁-C₆)-NR⁵R⁶, alkyle(C₁-C₆)-SO₃⁻E⁺ ou alkyle (C₁-C₆)-COO⁻E⁺, dans laquelle R⁵ et R⁶ sont identiques ou différents et représentent un hydrogène, phényle ou alkyle(C₁-C₆) ;
R⁴ est un hydrogène, alkyle (C₁-C₆), benzyle ou
phényle,
E⁺, G⁺ sont indépendamment l'un de l'autre un hydrogène, un métal alcalino-terreux, un métal alcalin ou un métal du troisième groupe principal.

2. Préparation pigmentaire selon la revendication 1, **caractérisée en ce que**, dans le composé de la formule (II), s est un nombre de 1 à 3 et n un nombre de 0 à 2.

3. Préparation pigmentaire selon une ou plusieurs des revendications 1 à 2, **caractérisée en ce que** le rapport pondéral du pigment C. I. Rouge 254 au dispersant de pigment de la formule (II) est compris entre (99,9 à 0,1) et (80 à 20).

4. Préparation pigmentaire selon la revendication 3, **caractérisée en ce que** le rapport pondéral du pigment C. I. Rouge 254 au dispersant de pigment de la formule (II) est compris entre (96 à 4) et (88 à 12).

5. Préparation pigmentaire selon une ou plusieurs des revendications 1 à 4, **caractérisée par** une largeur de valeur moyenne HWB du pic principal de 0,2 à 0,7 °2thêta dans le diffractogramme de poudre aux rayons X avec un rayonnement CuKₐₗₚₕₐ.

6. Procédé de production d'une préparation pigmentaire selon une ou plusieurs des revendications 1 à 5, **caractérisé en ce que** l'on mélange du pigment C. I. Rouge 254, avant ou pendant une répartition fine ou un traitement final, avec le dispersant de pigment de la formule (II).

7. Utilisation d'une préparation pigmentaire selon une ou plusieurs des revendications 1 à 5 pour la pigmentation de matières organiques à haut poids moléculaire d'origine naturelle ou synthétique.

8. Utilisation selon la revendication 7 pour la pigmentation de matières plastiques, de résines, de laques, de peintures, de toners et de révélateurs électrophotographiques, d'encres et d'encres d'imprimerie.

9. Utilisation selon la revendication 7 ou 8 pour la pigmentation de laques métalliques, de filtres de couleurs et d'encres d'impression à jet d'encre.
